# EUROPEAN PATENT SPECIFICATION

(11) **EP 2 665 412 B1**
(45) Date of publication and mention of the grant of the patent: **20.06.2018**
(21) Application number: 12736397.6
(22) Date of filing: 17.01.2012
(51) Int. Cl.: G01F 1/708, G01F 5/00, A61B 5/0295, A61B 5/0275, A61B 5/026

(54) **IN-LINE FLOW METER**
INLINE-DURCHFLUSSMESSER
DÉBITMÈTRE EN LIGNE

(30) Priority: 17.01.2011 US 201161433408 P
(43) Date of publication of application: 27.11.2013
(73) Proprietor: Biosynergetics, Inc., Zionsville, Indiana 46077 (US)
(72) Inventor: NYHART, Eldon H.,Jr., Zionsville Indiana 46077 (US)
(74) Representative: Wichmann, Hendrik
(86) International application number: PCT/US2012/021571
(87) International publication number: WO 2012/099889

(56) References cited:
- US-A- 3 605 741
- US-A- 3 889 120
- US-A- 5 470 307
- US-A- 5 919 356
- US-A- 6 086 582
- US-B1- 6 738 661

## Description

### BACKGROUND

### 1. Field of the Invention.

The present disclosure relates to a device and method for measuring flow. More particularly, the present disclosure relates to a device and method for measuring flow with decreased disturbance of the flow being measured.

### 2. Description of the Related Art.

Traditional in-line flowmeters are mechanical in nature and require reading of an indicator at the location of the installed in-line flowmeter. One such traditional flowmeter is marketed as the FL500 Series In-Line of Flowmeters by Omega Engineering.

The general operation of the traditional flowmeter provides for a flowing fluid to enter at one end of a mechanical device housing installed in the flowing fluid tubing or pipe. The flowing fluid forces a piston to move within the flowmeter apparatus against a spring. The spring is compressed relative to the pressure generated by the flowing fluid. The piston also accommodates the flowing fluid, allowing it to pass around the piston periphery and continue through the outlet of the inline flowmeter.

A portion of the piston is visible through a transparent portion of the housing. The position of the piston is viewed under a scale printed on the transparent portion. The position of the piston relative to the scale gives the fluid flow rate. Accordingly, traditional mechanical flowmeters rely on indirect pressure measurement by the spring loaded piston.

### SUMMARY

The present disclosure provides a flow meter including a flow vessel having a lumen; a medium disposed in communication with the lumen, the medium holding an agent; an emission site proximate the medium and including at least one energy receiver configured to receive energy and provide for release of the agent from the medium; and a detection site spaced apart downstream from the emission site, the detection site including at least one detector providing for detection of the presence of the agent.

The present invention as defined in the claims refers to a flow meter including:
a flow vessel having a lumen (16);
a medium disposed in communication with the lumen, the medium holding an agent (22);
an emission site (12) proximate the medium and including at least one energy receiver configured to receive energy and provide energy to the flow vessel to un-bond the agent from the medium such that the agent intermixes with the matter flowing in the flow vessel; and
a detection site (14) spaced apart downstream from the emission site, the detection site including at least one detector (32) providing for detection of the presence of the agent; and wherein said medium is a polymer (20), wherein said agent is bonded to the polymer via photolabile bonds,
a sensor (100) for determining the time between un-bonding (t1) of agent at the emission site and the arrival (t2) of agent at the detection site, wherein the sensor knows the distance between emission site (12) and detection site (14).
The invention as defined in the claims further refers to a method of detecting a flow rate
in a flow vessel including:
providing a medium, wherein said medium is a polymer, having an agent bonded thereto via photolabile bonds, the medium and agent being disposed to be in communication with a lumen of the flow vessel;
flowing matter through the flow vessel;
providing energy to the flow vessel at an emission site (12) to un-bond the agent from the medium such that the agent intermixes with the matter flowing in the flow vessel;
detecting the arrival of the agent at a detection site (14) downstream from the medium; and
determining a flow rate of the fluid based on the time between un-bonding and arrival of the agent as well as distance between the emission site (12) and detection site (14) of the agent.

### BRIEF DESCRIPTION OF THE DRAWINGS

The above-mentioned and other features of the present disclosure will become more apparent and the present disclosure itself will be better understood by reference to the following description of embodiments of the present disclosure taken in conjunction with the accompanying drawings, wherein:
Figure 1 is a partially cut-away perspective view of an integrated flow meter of the present disclosure;
Figure 1a is a cross sectional view of the integrated flow meter of Figure 1;
Figure 2 is a side plan view of an alternative embodiment integrated flow meter;
Figure 3 is a side plan view of an alternative embodiment integrated flow meter;
Figure 4 is a perspective view of an embodiment of a detector;
Figure 5 is a perspective view of the emitter of Figure 4 installed in a cuff;
Figure 6 is a perspective view of a part of another embodiment of a detector;
Figure 7 is a perspective view of the detector of that includes the part shown in Figure 6;
Figure 8 is a chart showing an exemplary light intensity pattern detected using the flowmeter of Figure 1.

Corresponding reference characters indicate corresponding parts throughout the several views. The exemplifications set out herein illustrate exemplary embodiments of the invention and such exemplifications are not to be construed as limiting the scope of the invention in any manner.

### DETAILED DESCRIPTION

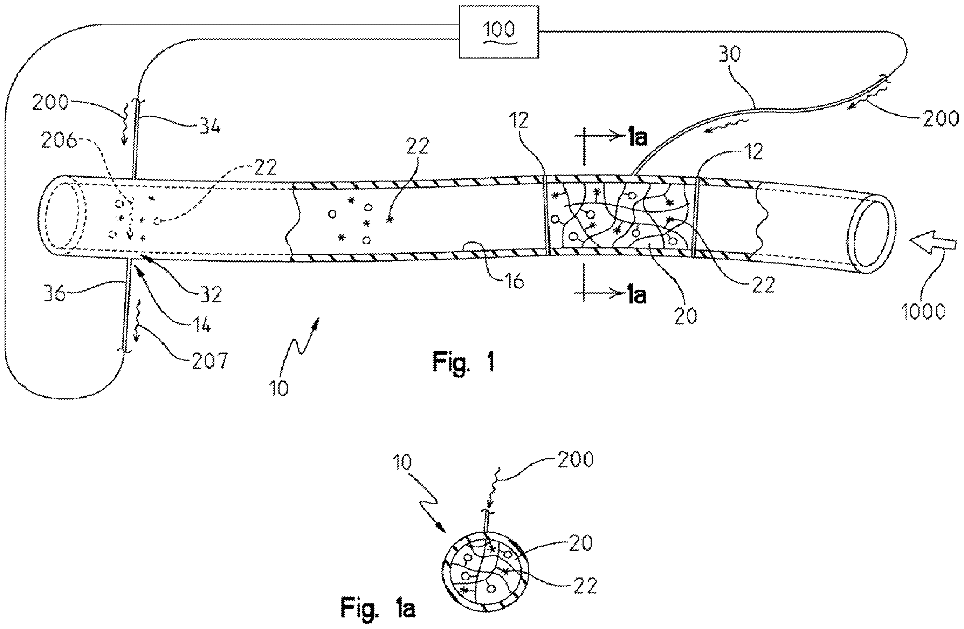

Figure 1 provides an illustrative flow path in the form of tube 10. Although the flow path is illustrated and described herein as tube 10, flow paths of the present disclosure may also include other configurations. Tube 10 includes emitter location 12, and detector location 14 spaced apart from emitter location. Tube 10 is further coupled to sensor 100.

Tube 10 is illustratively constructed from clear plastic tubing. Embodiments are also envisioned where tube 10 is constructed from fiber optic tubing. Still further, embodiments are envisioned where tube 10 is constructed from a combination of clear plastic tubing (or any other suitable tubing) and fiber optic tubing. The fiber optic portion of tube 10 is provided with a desired diffraction gradient. A diffraction gradient is an expression of the amount of light that is propagated (versus lost). For example, tubing can be provided that loses 10% of its energy every inch. Thus, the amount of light present five inches away from a source is approximately 59% the amount originally provided at the source.

Emitter location 12 includes polymer 20 disposed within lumen 16 of tube 10. Polymer 20 includes an optically detectable agent 22 linked by photolabile bonds to a polymer matrix. One such polymer 20 is discussed in U.S. Patent Application Publication No. 2009/0118696 (APPARATUS AND METHODS FOR THE CONTROLLABLE MODIFICATION OF COMPOUND CONCENTRATION IN A TUBE, filed October 31, 2007). Emitter location 12 further includes energy pathway 30. In the present example, polymer 20 is disposed within tube 10 to provide at least one lumen for fluid flow through polymer 20. Additional embodiments are envisioned where the lumen within polymer is of an equal size to lumen 16 and polymer 20 is provided in a portion of increased diameter. Still other embodiments are envisioned where polymer 20 is not within lumen 16, but rather sits outside tube 10 but that is still able to allow transfer of agents 22 into lumen 16.

In one embodiment, polymer 20 is a hydrogel, and detectable agents 22 are photolabily-linked to the molecules of the hydrogel. The photolabile linkages between agents 22 and the hydrogel are illustratively broken by exposing the photolabile bond with the proper wavelength of radiation to break the photolabile bond. In one embodiment, the source of radiation is a laser tuned to a band of wavelengths that is sufficient to break the photolabile links. However, the present invention also incorporates those embodiments in which the source of radiation includes lasers operating over wide ranges of wavelengths and also incoherent light.

Detector location 14 includes detector 32. As shown in Fig. 1, detector 32 includes energy supply pathway 34 and energy return pathway 36. Pathways 34, 36 are positioned such that energy supplied by pathway 34 can, at least partially, be received and transmitted by pathway 36.

Pathways 30, 34, 36 are coupled to sensor 100. Pathways 30, 34, 36 are illustratively fiber optic strands. Illustratively, pathways 30, 34, 36 are end-glow fiber optic strands.

Sensor/controller 100 includes modules that are able to convert electric signals to optical signals used in pathways 30, 34, 36. Sensor 100 is shown as an integrated member to which pathways 30, 34, 36 directly connect. However, it should be appreciated that embodiments are envisioned where the modules are distinct from sensor 100 such that there are electronic leads between sensor 100 and the modules for communication therebetween. Sensor 100 includes electronic storage that knows various physical characteristics of the setup of tube 10, emitter locations 12, and detector location 14.

In use, tube 10 contains a flowing fluid, such as a liquid or a gas and can also be a flow of solid particulate matter such as an aerosol or solid microparticles. The fluid flows within tube 10 and through polymer 20 along direction 1000. According to a programmed setting or manual engagement, sensor 100 emits a signal that causes energy to be conducted along pathway 30.

The emitted energy travels along pathway 30 and is then emitted in tube 10 at emitter 12 such that polymer 20 is exposed thereto. As described in more detail in U.S. Patent Application Publication No. 2009/0118696, exposure of the provided energy on polymer 20 causes release of agents 22. In the illustrated embodiment, the emitted energy is a pulse of light, such as that generated by a laser of a prescribed frequency.

Agents 22 are thereby released from bonds holding them in place. The release forms a bolus of agents 22. The size of the bolus of agents 22 is determined by the intensity of light provided at emitter location 12 and the diffraction gradient of tube 10. Initially, polymer 20 is full of agents 22. Accordingly, the intensity of the provided light is chosen such that the agents 22 within the first inch (or other desired length) will receive light having enough energy to break the photolabile bonds. Accordingly, agents 22 within the first inch will be released while agents 22 beyond the first inch will not be subjected to enough energy to break the bonds. A subsequent desired activation of the system will require increased light intensity such that, given the diffraction gradient, light will reach another section of polymer having agents 22 therein for release. In the provided example shown in Fig. 1, emitter locations 12 are provided at each end of the section of polymer 20. Thus, at the point that half the agents 22 are released, a second emitter location can be used instead, thereby reducing the amount of energy needed to achieve release. It should also be appreciated that this discrete sectioning of where agents 22 are being released from also allows increased specificity with respect to the distance that agents 22 must travel to reach detector location 14.

The release frees the bolus of agents 22 to be subjected to the forces presented by the fluid flowing in tube 10. Such forces carry agents 22 in direction 1000. Eventually, the flow causes agents 22 to arrive at detector location 14.

As previously noted, detector location 14 has pathways 34, 36. Pathway 34 delivers sensor light 200 to the outer tubing surface. This light 200 then proceeds through the tubing body through a clear portion of the tubing wall. Light 200 then enters the tubing lumen and provides a beam of light 206 which traverses the diameter of the tubing lumen, where flowing fluid exists, reaching the opposite side of the lumen. The exiting light 207 passes out of the tubing in a similar fashion as it entered on the opposite side of the tubing and is carried away through pathway 36. Both light entering the detector location 14 as light 200, and light exiting the detector location 14 as light 207 can easily be carried long distances from commonly available light energy sources, or to suitable commonly available light detectors for processing.

The laser light 200 has a base transference property that defines an amount of light expected to traverse tube 10 and the fluid and be received by pathway 36. The arrival of agents 22 provide that the amount of light received by pathway 36 is reduced.

A characteristic of agent 22 is that it can absorb and/or deflect light 200 supplied through the wall of tube 10. When the bolus of agent 22 passes through the beam 206, a portion of the light 200 will be absorbed/deflected before the remaining light exits as light 207. Light 207 can travel a substantial distance so that its intensity can be determined using standard light detectors.

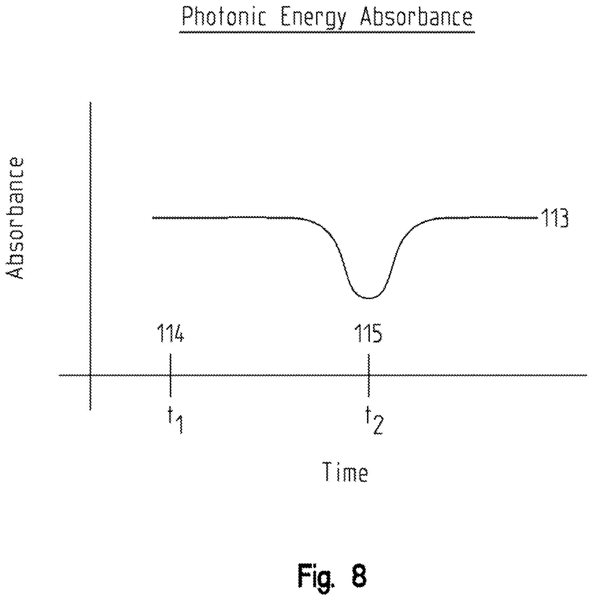

Fig. 8 represents the intensity 113 of light 207 over time. Time t1 (114) represents the time when the bolus of light is provided to emitter location 12, thereby releasing a portion of agent 22. Time t2 (115) represents the time when the bolus of agent 22 passes through the beam at detector location 14. At time 115 the intensity 113 measurement of light 207 decreases due to light absorbance/deflection of agents 22.

Sensor 100 knows when energy was emitted along pathway 30, knows the amount of light expected to traverse tube 10 in the absence of agents 22 in the fluid, and detects the amount of light traversing tube 10 when agents 22 are present in the fluid. Sensor 100 detects agents 22 as they pass through detector location 14 using photonic absorbance/deflection differences. Sensor 100 further knows the distance between emitter location 12 and detector location 14.

Accordingly, the absorbance/deflection difference allows sensor 100 to determine the time between release t1 and arrival t2 of agents 22. By also knowing the distance between emitter location 12 and detector location 14 as well as by knowing other factors that impact flow of agents 22, a flow rate of the fluid within tube 10 can be determined.

Agents 22 can be considered in solution with a portion of fluid immediately surrounding polymer 20 after release at location 12. Polymer 20 is also in contact with the convective flowing fluid material. It is anticipated that free agents 22 in solution may take some time to fully merge with the convective fluid flow. If significant, this finite time-lag, t0, can be quantified from calibration measurements for various flowrates.

The linear distance along the tube or pipe between locations 12, 14 can be obtained/supplied as d1. The rate of the flowing fluid (length/time) can be calculated directly using the formula d1/(t2-(t0+t1)).

This type of flowmeter develops almost no resistance to fluid flow, thereby not affecting pressure gradients on either side of the new in-line flowmeter. Possible disturbance of the flowing fluids can result in increased turbulence as fluid passes through the traditional flowmeter thereby creating increased shearing energies within the fluid which may contribute to degradation of fluid characteristics sensitive to shear stresses.

The in-line flowmeter of the present disclosure also is linear in its operation and performs equally well at both relatively fast and slow flowrates. A mechanical in-line flowmeter is potentially limited by nonlinear spring action responses, thus potentially being insensitive to very slow and very fast flowrates. Additionally, the mechanical nature can wear out and change over time, while the new in-line flowmeter remains constant in its operation, as long as agent 22 is present. Mechanical flowmeters can cause increasing head pressure, or pressure on the inlet side as compared to the outlet side. These pressure differentials are additive so that multiple mechanical flowmeters placed in-line create greater differences in pressure when comparing the inlet pressure to the final exit pressure. In a large plant this can be a major factor in process control.

It should also be appreciated that there are no electrical components directly associated with the new in-line flowmeter. For remote sensing of the traditional in-line flowmeter electromechanical mechanisms are required, adding to the complexity, susceptibility to failure, and cost of remote sensing. Local sensing of the mechanical flowmeter is available by observing a window, either personally or possibly remotely by camera.

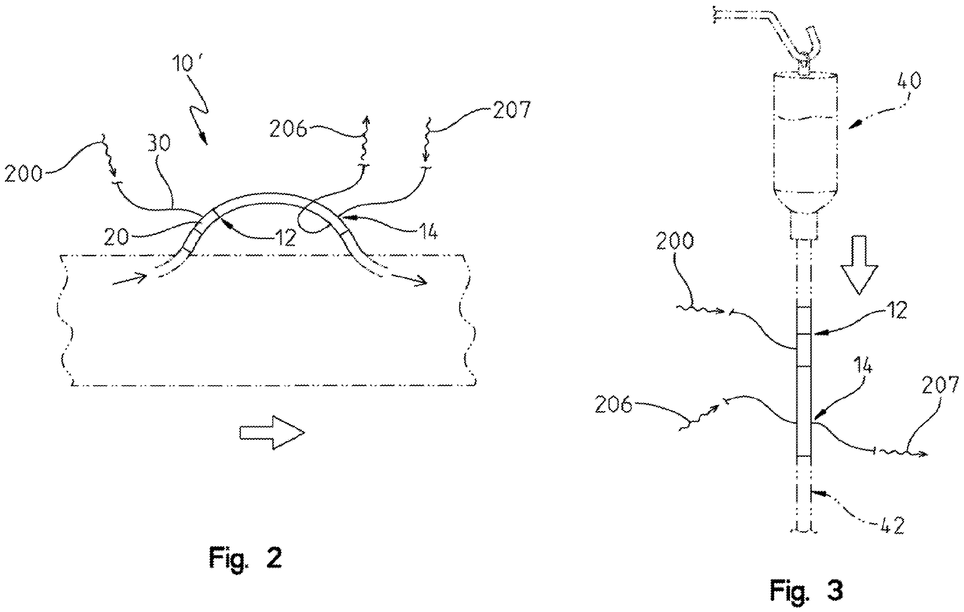

The advantages of not disturbing the flowing fluid mechanically can be exploited for fluids susceptible to clogging or shearing stresses, or very fast or very slow (iv infusions) flowrates. Figure 3 shows one such implementation. Figure 3 shows iv bag 40 with output tubing 42. Output tubing 42 is provided with emitter location 12 and detector location 14. As described above, a flow rate within tubing 42 can thus be assessed.

The advantages of measuring flowrate with no mechanical mechanisms and no electromechanical elements allows measuring flowrates of explosive or volatile fluids (airplane/automobile fuel control and delivery). This allows for safer handling of fuel transport and handling relative to the traditional flowrate measuring. It should be appreciated that agent 22 is chosen such that its presence has minimal or no effect upon the purpose of the fluid (such as in fuel delivery, agent 22 is chosen such that it does not have a detrimental effect upon the fuel's ability to be used in an engine and so as to not leave undesired residues).

Additionally, the in-line flowmeter of the present disclosure provides no moving parts, thereby reducing failure points. Operation of the flowmeter also allows that very high and very low flow rates can be detected. Traditional flow meters often have to pick which of high and low flow rates they aim to accurately measure.

It should be appreciated that operation of flow meter tubing 10 relies on degradation/alteration of polymer 20 to release agent 22. Accordingly, each activation of emitter location 12 uses some of the discrete and finite amount of agent 22 present within polymer 20. Accordingly, while this presents little problem in instances where tube 10 is intended to be disposable, such as tubing 42, more permanent and long standing implementations may benefit from the ability to replenish agent 22 and polymer 20.

Figure 2 shows an embodiment that provides for easy replenishment of agent 22 and polymer 20. Tube 10', rather than being the primary fluid pathway, is provided as an auxiliary pathway. If agent 22 is depleted, emitter location 12 can be clipped out, or otherwise removed, and replaced by a new emitter location 12 with a new supply of polymer 20 and agent 22. Embodiments are envisioned where polymer 20 and agents 22 are provided as part of removable cartridges that are readily removable and replaceable. Spent cartridges or sections can then be "recharged" by introducing additional agents 22 and photolabily bonding agents 22 to polymer 20.

In addition to depletion of agents 22, the release response of polymer 20 can be affected by the distance that polymer 20 is located from the exact spot that energy is applied to tube 10. As noted, release of agents 22 is dependent upon provided energy coming into contact with the photolabile bonds with agents 22. The most likely bonds to interface with energy are those closest to the interface of pathway 30 with tube 10. Accordingly, agents 22 closest to pathway 30 are most likely to be broken. As more agent 22 is released, the location of the majority of viable agent 22 still available to be released becomes located farther from entry emitter disc pathway 30. Additionally, transmittance of energy along pathway 30 and tube 10 may degrade with increased distance (via the set diffraction gradient). Accordingly, it is envisioned that energy is supplied with increased intensity or magnitude to offset any expected losses. Accordingly, any expected reduction in response by polymer 20 due to distance can be offset by increased energy supply.

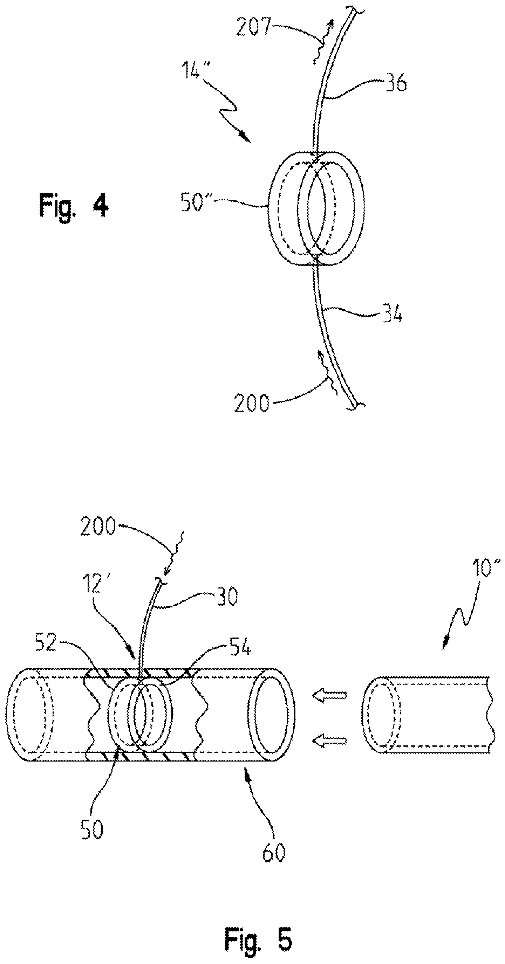

Figure 4 shows another embodiment detector location 14". Detector location 14" provides energy pathways 34, 36 that interface with ring 50" to act as a detector. Ring 50" can be located within a butt joint housing similarly to that discussed below (see butt joint housing 60 of Fig. 5).

Figure 5 shows another embodiment emitter location 12'. Emitter location 12' provides energy pathway 30 that interfaces with ring 50 of "side-glow" fiber optic material. The light emission profile of ring 50 can be customized as desired by applying opaque coatings to surfaces where light emission is not desired. Accordingly, in the provided example, energy supplied to ring 50 is emitted therefrom along side 54. Ring 50 is disposed within butt-joint housing 60. Butt joint housing 60 is provided with an interior diameter substantially equal to the outer diameter of ring 50. Ring 50 is sized such that its outer diameter is substantially equal to the outer diameter of tubing 10". Tubing 10" is fiber optic tubing sized to be received within butt-joint housing 60. As shown in Figure 5, tubing 10" is received within butt-joint housing 60 to abut ring 50 and create a fluid seal therebetween. Tubing 10" has polymer 20 disposed therein. Accordingly, energy supplied to ring 50 is supplied to tubing 10" and propagated thereby. The energy eventually encounters polymer 20 to cause release of agent 22.

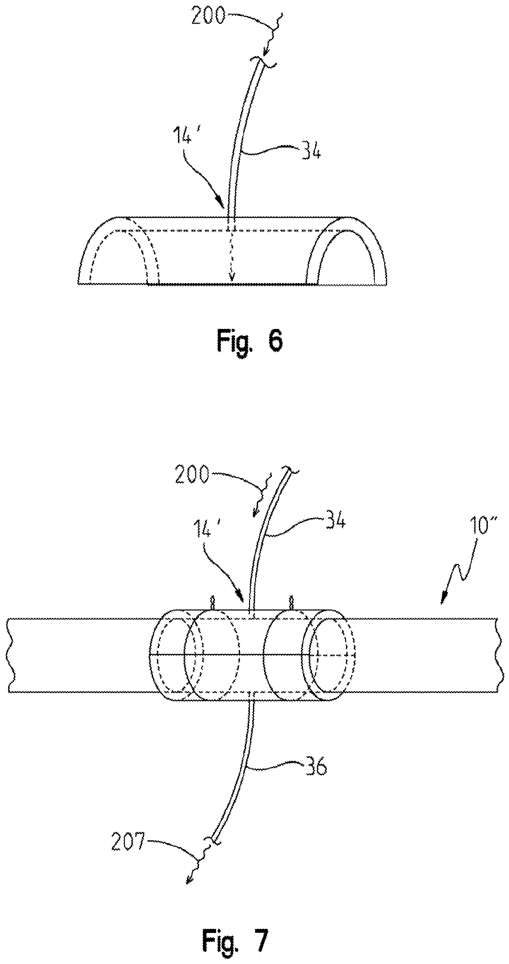

Figure 6 shows one half of another embodiment detector location 14'. Detector location 14' is attachable to tubing 10, 10', 10" downstream of the location of polymer 20. (Additionally, the half shown in Fig. 6 could also be used as another embodiment emitter location 12.) Both halves of detector location 14' are shown in Fig. 7. Other embodiments are envisioned where the halves of detector location 14' are not separate but otherwise provide for selective application to tubing 10, 10', 10". Detector location 14' is attachable to allow placement on otherwise standard tubing. It should be appreciated that the variable placement of detector location 14' requires that such placement be communicated or input to sensor 100. Detector location 14' operates like detector location 14 by providing energy and capturing energy that is able to traverse tubing 10, 10', 10" and fluid therein.

Embodiments are also envisioned where patterns in the signal of exiting light 207 are analyzed by sensor 100. Such signal analysis can then provide flow characteristics such as turbidity, viscosity, and turbulence. Additionally, embodiments are envisioned where more than one sensor is installed downstream to be able to determine wave front characterization and added accuracy.

## Claims

1. A flow meter including:
a flow vessel having a lumen (16);
a medium disposed in communication with the lumen, the medium holding an agent (22);
an emission site (12) proximate the medium and including at least one energy receiver configured to receive energy and provide energy to the flow vessel to un-bond the agent from the medium such that the agent intermixes with the matter flowing in the flow vessel; and
a detection site (14) spaced apart downstream from the emission site, the detection site including at least one detector (32) providing for detection of the presence of the agent; and wherein said medium is a polymer (20), wherein said agent is bonded to the polymer via photolabile bonds,
a sensor (100) for determining the time between un-bonding (t1) of agent at the emission site and the arrival (t2) of agent at the detection site, wherein the sensor knows the distance between emission site (12) and detection site (14).

2. The meter of claim 1, wherein the agent absorbs light (207) and/or scatters light (207).

3. The meter of claim 1, wherein the energy is light energy.

4. The meter of claim 1, wherein the emission site includes fiber optic tubing (42).

5. The meter of claim 1, wherein the sensor receives an indication of when agent is un-bonded at the emission site and the sensor receiving an indication of when agent arrives at the detection site.

6. The meter of claim 5, wherein the sensor includes software to analyze the indication of when the agent arrives at the detection site to perform pattern recognition and determine at least one of turbidity, viscosity, and turbulence of a measured flow.

7. The meter of claim 1, wherein the detector includes a light source and a light detector, the detector providing detection of transmittance of light from the light source.

8. The meter of claim 1, wherein the at least one energy receiver is configured to receive energy at the direction of the sensor (100) and provides for un-bonding of the agent from the polymer; and wherein
the detection site is spaced apart downstream from the emission site by a first distance, the first distance being provided to the sensor, the detection site including a light source projecting light across the lumen and the at least one detector providing for detection of the presence of the agent by monitoring an amount of the projected light that is detected by the at least one detector.

9. The meter of claim 8, wherein the emission site includes fiber optic tubing with a defined diffraction gradient that, along with an intensity of provided energy, determines an amount of agent released into the lumen.

10. A method of detecting a flow rate in a flow vessel including:
providing a medium, wherein said medium is a polymer, having an agent bonded thereto via photolabile bonds, the medium and agent being disposed to be in communication with a lumen of the flow vessel;
flowing matter through the flow vessel;
providing energy to the flow vessel at an emission site (12) to un-bond the agent from the medium such that the agent intermixes with the matter flowing in the flow vessel;
detecting the arrival of the agent at a detection site (14) downstream from the medium; and
determining a flow rate of the fluid based on the time between un-bonding and arrival of the agent as well as distance between the emission site (12) and detection site (14) of the agent.

11. The method of claim 10, wherein said polymer is coupled to the flow vessel.

12. The method of claim 10, wherein the energy is light energy.

13. The method of claim 10, further including providing a sensor, receiving an indication of when agent is un-bonded at the emission site, and receiving an indication of when agent arrives at the detection site (14).

## Patentansprüche

1. Durchflussmesser, der einschließt:
ein Durchflussgefäß mit einem Lumen (16);
ein Medium, das in Kommunikation mit dem Lumen angeordnet ist, wobei das Medium ein Mittel (22) hält;
eine Emissionsstelle (12) nahe beim Medium und die mindestens einen Energieempfänger einschließt, der konfiguriert ist, Energie zu empfangen und Energie an das Durchflussgefäß bereitzustellen, um eine Bindungstrennung des Mittels vom Medium zu bewirken, so dass sich das Medium mit dem Stoff, der im Durchflussgefäß fließt, vermischt; und
eine Detektionsstelle (14), die stromabwärts von der Emissionsstelle getrennt ist, wobei die Detektionsstelle mindestens einen Detektor (32) einschließt, der die Detektion der Gegenwart des Mittels bereitstellt; und wobei das Medium ein Polymer (20) ist, wobei das Mittel an das Polymer über photolabile Bindungen gebunden ist,
einen Sensor (100) zum Bestimmen der Zeit zwischen der Bindungstrennung (t1) vom Mittel an der Emissionsstelle und der Ankunft (t2) vom Mittel an der Detektionsstelle, wobei der Sensor die Distanz zwischen Emissionsstelle (12) und Detektionsstelle (14) kennt.

2. Messer nach Anspruch 1, wobei das Mittel Licht (207) absorbiert und/oder Licht (207) streut.

3. Messer nach Anspruch 1, wobei die Energie Lichtenergie ist.

4. Messer nach Anspruch 1, wobei die Emissionsstelle Glasfaserkabel (42) einschließt.

5. Messer nach Anspruch 1, wobei der Sensor eine Anzeige empfängt, wann ein Mittel an der Emissionsstelle eine Bindungstrennung erfährt, und der Sensor eine Anzeige empfängt, wann ein Mittel an der Detektionsstelle ankommt.

6. Messer nach Anspruch 5, wobei der Sensor Software einschließt, um die Anzeige zu analysieren, wann das Mittel an der Detektionsstelle ankommt, um eine Mustererkennung durchzuführen und mindestens eines von Trübung, Viskosität und Turbulenz eines gemessenen Flusses zu bestimmen.

7. Messer nach Anspruch 1, wobei der Detektor eine Lichtquelle und einen Lichtdetektor einschließt, wobei der Detektor die Detektion der Transmission von Licht aus der Lichtquelle bereitstellt.

8. Messer nach Anspruch 1, wobei der mindestens eine Energieempfänger konfiguriert ist, Energie in der Richtung des Sensors (100) zu empfangen und die Bindungstrennung des Mittels vom Polymer bereitstellt; und wobei
die Detektionsstelle stromabwärts von der Emissionsstelle durch eine erste Distanz getrennt ist, wobei die erste Distanz dem Sensor bereitgestellt wird, wobei die Detektionsstelle eine Lichtquelle einschließt, die Licht über das Lumen und den mindestens einen Detektor ausstrahlt, was die Detektion der Gegenwart des Mittels durch Beobachten einer Menge des ausgestrahlten Lichts bereitstellt, das durch den mindestens einen Detektor detektiert wird.

9. Messer nach Anspruch 8, wobei die Emissionsstelle Glasfaserkabel mit einem definierten Beugungsgradienten einschließt, der, zusammen mit einer Intensität der bereitgestellten Energie, eine Menge des in das Lumen freigesetzten Mittels bestimmt.

10. Verfahren zum Detektieren einer Durchflussrate in einem Durchflussgefäß, das einschließt:
Bereitstellen eines Mediums, wobei das Medium ein Polymer ist, mit einem daran über photolabile Bindungen gebundenen Mittel, wobei das Medium und das Mittel angeordnet sind, in Kommunikation mit einem Lumen des Durchflussgefäßes zu sein;
Durchfließenlassen eines Stoffes durch das Durchflussgefäß;
Bereitstellen von Energie an das Durchflussgefäß an einer Emissionsstelle (12), um eine Bindungstrennung des Mittels vom Medium zu bewirken, so dass sich das Medium mit dem Stoff, die im Durchflussgefäß fließt, vermischt;
Detektieren der Ankunft des Mittels an einer Detektionsstelle (14) stromabwärts vom Medium; und
Bestimmen einer Durchflussrate des Fluids basierend auf der Zeit zwischen der Bindungstrennung und der Ankunft des Mittels sowie der Distanz zwischen der Emisionsstelle (12) und der Detektionsstelle (14) des Mittels.

11. Verfahren nach Anspruch 10, wobei das Polymer mit dem Durchflussgefäß gekoppelt ist.

12. Verfahren nach Anspruch 10, wobei die Energie Lichtenergie ist.

13. Verfahren nach Anspruch 10, das weiterhin Bereitstellen eines Sensors einschließt, der eine Anzeige empfängt, wann ein Mittel an der Emissionsstelle eine Bindungstrennung erfährt, und eine Anzeige empfängt, wann ein Mittel an der Detektionsstelle (14) ankommt.

## Revendications

1. Débitmètre, comprenant :
un récipient d'écoulement comportant une lumière (16) ;
un support disposé en communication avec la lumière, le support contenant un agent (22) ;
un site d'émission (12) situé à proximité du support et comprenant au moins un récepteur d'énergie conçu pour recevoir de l'énergie et pour appliquer de l'énergie au récipient d'écoulement de façon à supprimer une liaison de l'agent avec le support de sorte que l'agent se mélange avec la matière s'écoulant dans le récipient d'écoulement ; et
un site de détection (14) situé espacé vers l'aval du site d'émission, le site de détection comprenant au moins un détecteur (32) conçu pour une détection de la présence de l'agent ; et dans lequel ledit support est un polymère (20), dans lequel ledit agent est lié au polymère par le biais de liaisons photolabiles,
un capteur (100) destiné à déterminer le temps séparant une suppression de liaison (t1) d'agent au niveau du site d'émission et l'arrivée (t2) d'agent au niveau du site de détection, dans lequel le capteur connaît la distance entre le site d'émission (12) et le site de détection (14).

2. Débitmètre selon la revendication 1, dans lequel l'agent absorbe la lumière (207) et/ou diffuse la lumière (207).

3. Débitmètre selon la revendication 1, dans lequel l'énergie est de l'énergie lumineuse.

4. Débitmètre selon la revendication 1, dans lequel le site d'émission comprend un tube à fibres optiques (42).

5. Débitmètre selon la revendication 1, dans lequel le capteur reçoit une indication de l'instant auquel un agent a fait l'objet d'une suppression de liaison au niveau du site d'émission et le capteur recevant une indication de l'instant auquel un agent arrive au niveau du site de détection.

6. Débitmètre selon la revendication 5, dans lequel le capteur comprend un logiciel destiné à analyser l'indication de l'instant auquel l'agent arrive au niveau du site de détection pour exécuter une reconnaissance de motif et pour déterminer au moins l'une d'une turbidité, d'une viscosité et d'une turbulence d'un écoulement mesuré.

7. Débitmètre selon la revendication 1, dans lequel le détecteur comprend une source de lumière et un détecteur de lumière, le détecteur fournissant une détection de transmittance de lumière à partir de la source de lumière.

8. Débitmètre selon la revendication 1, dans lequel l'au moins un récepteur d'énergie est conçu pour recevoir de l'énergie par le biais du capteur (100) et assure une suppression de liaison de l'agent avec le polymère ; et dans lequel
le site de détection est espacé vers l'aval du site d'émission d'une première distance, la première distance étant fournie au capteur, le site de détection comprenant une source de lumière projetant de la lumière à travers la lumière et l'au moins un détecteur assurant une détection de la présence de l'agent par une surveillance d'une quantité de la lumière projetée qui est détectée par l'au moins un détecteur.

9. Débitmètre selon la revendication 8, dans lequel le site d'émission comprend un tube à fibres optiques à gradient de diffraction défini qui, conjointement avec une intensité d'énergie appliquée, détermine une quantité d'agent libérée dans la lumière.

10. Procédé de détection d'un débit dans un récipient découlement, consistant à :
utiliser un support, dans lequel ledit support est un polymère, un agent étant lié à ce dernier par le biais de liaisons photolabiles, le support et l'agent étant disposés de façon à se trouver en communication avec une lumière du récipient d'écoulement ;
provoquer l'écoulement d'une matière à travers le récipient d'écoulement ;
appliquer de l'énergie au récipient d'écoulement au niveau d'un site d'émission (12) pour assurer une suppression de liaison de l'agent avec le support de sorte que l'agent se mélange avec la matière s'écoulant dans le récipient d'écoulement ;
détecter l'arrivée de l'agent au niveau d'un site de détection (14) en aval du support ; et
déterminer un débit du fluide sur la base du temps séparant une suppression de liaison et une arrivée de l'agent de même que d'une distance séparant le site démission (12) et le site de détection (14) de l'agent.

11. Procédé selon la revendication 10, dans lequel ledit polymère est couplé au récipient d'écoulement.

12. Procédé selon la revendication 10, dans lequel l'énergie est une énergie lumineuse.

13. Procédé selon la revendication 10, consistant en outre à utiliser un capteur, à recevoir une indication de l'instant auquel un agent fait l'objet d'une suppression de liaison au niveau du site d'émission, et à recevoir une indication de l'instant auquel un agent arrive au niveau du site de détection (14).
